# EUROPEAN PATENT SPECIFICATION

(11) **EP 2 340 684 B1**
(45) Date of publication and mention of the grant of the patent: **16.07.2014**
(21) Application number: 09751789.0
(22) Date of filing: 27.10.2009
(51) Int. Cl.: H04W 92/20, H04W 24/02, H04W 84/04

(54) **METHOD FOR OPERATION OF A WIMAX NETWORK AND WIMAX NETWORK**
VERFAHREN ZUM BETRIEB EINES WIMAX-NETZWERKS UND WIMAX-NETZWERK
PROCÉDÉ DE FONCTIONNEMENT D'UN RÉSEAU WIMAX ET RÉSEAU WIMAX

(30) Priority: 27.10.2008 EP 08253496
(43) Date of publication of application: 06.07.2011
(73) Proprietor: NEC EUROPE LTD., 69115 Heidelberg (DE)
(72) Inventor: FAN, Linghang, GU21 6NY (GB); MAEDER, Andreas, 9707 Wuerzburg (DE); ZHOU, Jun, London W3 0DF (GB); ZHOU, Yuefeng, Oxshott KT22 0RW (GB)
(74) Representative: Ullrich & Naumann
(86) International application number: PCT/EP2009/007671
(87) International publication number: WO 2010/049120

(56) References cited:
- "Mechanisms to Jointly Ensure QoS of Macrocell and Femtocell by Enabling Power Control in Femtocells" IP.COM JOURNAL, IP.COM INC., WEST HENRIETTA, NY, US, 16 October 2008 (2008-10-16), XP013126577 ISSN: 1533-0001
- NOKIA SIEMENS NETWORKS ET AL: "Algorithms and results for autonomous component carrier selection for LTE-Advanced" 3GPP DRAFT; R1-083733, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080924, 24 September 2008 (2008-09-24), XP050317072 [retrieved on 2008-09-24]

## Description

The present invention relates to a method for operation of a WiMAX network and to a WiMAX network, said network including a WiMAX macrocell network with one or more macrocell base stations and at least one femtocell base station, said macrocell base stations and said at least one femtocell base station being configured to offer connectivity to mobile stations.

There is currently an interest from mobile network operators to deploy so called femtocells (also known as home base stations, home BTS, picocells, home NBs, femto access points (FAPs), or femto radio base stations) which would be installed within the homes of the operators' customers (see for reference Airvana whitepaper, "Femtocells: Transforming The Indoor Experience"). Such femtocells, currently being developed and standardized for both 3G and 4G networks, are scaled-down low-cost mobile base stations with low transmit power. Installation of femtocell BSs will typically be handled by the customers themselves without any technical training, therefore it has to be a simple plug-and-play procedure. Femtocell base stations are similar to a WiFi Access Point, but the radio interface is based on wide area cellular network standards such as WiMAX (Worldwide Interoperability for Microwave Access), UMTS (Universal Mobile Telecommunications System) or 3GPP LTE (Long Term Evolution). Femtocell BSs are connected to the operators' network via a virtual private network connection over a normal broadband internet connection like DSL.

One reason for the introduction of femtocells is the increase of operator network coverage and throughput for the sake of a better user experience and therewith to make a big step towards fixed-mobile-convergence. Like Wi-Fi access points, femtocells are designed to be deployed in home and office environments in order to give full coverage in the respective area and deployment of high density is expected in areas with high population or office density. However, the deployment of femtocells comes along with drawbacks of which one is interference effects between macro and femto levels of the network. Since femtocell BSs are often deployed in the same licensed spectrum as the wide area network of the operator, it is important to configure the radio interface correctly to avoid interference with other base stations.

The present invention focuses on femtocells based on the WiMAX and IEEE 802.16 standard. WiMAX is defined as World Wide Interoperability for Microwave Access based upon the standards family of IEEE 802.16. WiMAX is a time-synchronized communication technology in which frames have to be transmitted contemporaneously. The technology employed for data transmission in WiMAX communication networks is called OFDMA (Orthogonal Frequency Division Multiple Access), which is based on the usage of a large number of closely spaced orthogonal subcarriers. The OFDMA frame structure is divided by subcarriers in frequency domain, and by symbols in time domain. Users will be assigned a two dimensional (time and frequency domains) allocation, called "burst", to transmit/receive data.

Femtocell networks can improve indoor coverage and capacity. However, a femtocell base station needs to carefully balance its transmit power, which should be high enough to ensure good signal strengths for its subscribers, but not too high to avoid severe inference to other mobile stations, other femtocells and possible co-located macrocell base stations. To address this problem, according to prior art solutions femtocells are linked to the network's Radio Resource Management (RRM), which is a functional/logical unit that is typically located in the Radio Access Network and that is responsible e.g. for frequency allocation. However, controlling the transmit power of femtocell base stations via an RRM requires communication of the femtocell base stations with macrocell base stations via the core network resulting in a relatively high latency. Consequently, reactions to changing interference situations are rather slow.

Other prior art solution focusing on mitigating interference situations is disclosed in " Mechanisms to Jointly Ensure QoS of Macrocell and Femtocell by Enabling Power Control in Femtocells", authors: Naveen Arulselvan, Suresh Kalyanasundaram, and Vinod Ramachandran.

It is an object of the present invention to improve and further develop a method for operation of a WiMAX network and a WiMAX network of the initially described type in such a way that, by employing mechanisms that are readily to implement, effective responses to interference situations are possible.

The objectives of the invention are achieved by means of the features of the independent claims. Preferred embodiments are disclosed in the dependent claims.

According to the invention it has been recognized that prior art systems are rather cumbersome since they require a communication with a (centralized) radio resource management unit, which results in relatively long signaling paths via the core network. The present invention pursues a more decentralized approach by realizing direct communication between femtocell base stations on the one hand and the WiMAX macro cell network on the other hand via a direct link which is an over-the-air link that is established between a femtocell base station and one or more WiMAX macro cell base stations. The invention takes advantage of the fact that over-the-air communication via the air interface is very fast (e.g. compared to an indirect link between the macrocell and femtocell BSs via an ASN), thereby enabling a quick response to the current interference situation. Furthermore, the over-the-air communication between femtocell and macrocell BSs can be used on other areas, such as ranging.

According to a preferred embodiment it may be provided that the over-the-air link is established in form of signals or a logical channel. This means that a femtocell base station acts like a special mobile station in that it only uses signals and/or control channels. In other words, the over-the-air link will only be established for the control plane, and no data channels will be allocated to a femtocell base station for that link.

According to a preferred embodiment the femtocell base station may employ the direct link to receive information from one or more of said macrocell base stations. On the other hand, the femtocell base station may report information to the macrocell base stations. For instance, the femtocell base station may conduct measurements by itself (also on request from a macrocell base station), and report the results back to the macrocell base station. Moreover, the femtocell base station may report measurement results from attached mobile stations to macrocell base stations. In this regard, the femtocell base station would acts as a forwarding node for measurement reports received from attached mobile stations.

The direct link between a femtocell base station and one or more macro cell base stations may serve different purposes. For instance, a macro cell base station may employ the over-the-air links to record information related to each femtocell base station being located in its coverage area. To this end, the macro cell base station may administrate a list with entries for the femtocell base station located in the coverage area. The list may be updated on a regular basis.

Concerning the above mentioned information that is recorded by a macro cell base station, it proves to be advantageous that this information includes, but not limited to, the location of a femtocell base station, the transmit power and/or measurement information from a femtocell base station. The measurement information may include results of measurements performed by the femtocell base station itself. For instance, a femtocell base station can measure strong radio signals from a neighboring femtocell base station leading to interferences. Alternatively or additionally, the measurement information may include feedback information that a femtocell base station receives from mobile stations located within its coverage area. For instance, mobile stations may report their signal to noise ratio or their pilot signal strength to a femtocell base station, which then forwards this information to the macro cell base station.

According to a specific embodiment the direct link can be established as a unidirectional link from a macro cell base station to at least one femtocell base station. This means that the macro cell base station can impact on the femtocell base stations, e. g. by sending instructions to a femtocell base station to adjust its transmit power. However, such unidirectional link does not facilitate a femtocell base station to report its measurements to the macro cell base station. In such case it may be provided that femtocell base stations report their measurement information to the macro cell base station via an ASN (Access Service Network) gateway. However, if femtocell base stations belong to different operators, it is not feasible for the femtocells to report to the macro cell base stations via ASN gateways.

For the latter case it may be beneficial to establish the direct link as a bidirectional link. In such case femtocell base stations can be configured to report their measurement information via the (bidirectional) direct link to the macro cell base stations. In any case, e. g. either with a unidirectional link and reporting via an ASN gateway or with the bidirectional link and a direct reporting via the direct link, it may be provided that the femtocell base stations perform their measurement information reports on a regular basis. Consequently, the corresponding lists administrated by the macro cell base stations always carry updated and valid information. Alternatively, a femtocell base station may be configured to make a report to the macro cell base station only in case of changes of the radio situation, e.g. caused by a mobile station attaching/detaching to/from the femtocell base station or by the deployment of a new neighboring femtocell base station.

According to a preferred embodiment the direct link is employed by a macro cell base station to inform a femtocell base station to adjust their transmit power and/or their allocated subchannels. This leads to a quick response to deal with possible interferences between femtocell, macro cells and mobile stations.

According to a particularly preferred embodiment, the direct link is employed for information exchange between different femtocell base stations with a macro cell base station functioning as relay node. Since a femtocell can report its measurements to the macro cell base station, if a macro cell base station finds a femtocell base station reporting high interference, it can check the power settings and the interference levels of adjacent femtocells. The macro cell base station may then directly indicate the femtocell base stations to adjust the transmit power or to relay the related information to bridge the negotiation among the involved femtocells. Receiving the indication from the macro cell base station, femtocell base stations may negotiate the transmit power and subchannel settings by themselves.

There are several ways how to design and further develop the teaching of the present invention in an advantageous way. To this end, it is to be referred to the patent claims subordinate to patent claim 1 and to the following explanation of preferred examples of embodiments of the invention, illustrated by the figures. In connection with the explanation of the preferred examples of embodiments of the invention by the aid of the figures, generally preferred embodiments and further developments of the teaching will be explained. In the drawings the only
- Fig.: shows a section of a WiMAX network according to one embodiment of the present invention.

The Fig. schematically illustrates a part of a WiMAX network including a macrocell base station BS together with two femtocell base stations, both being located within the coverage area of the macrocell BS. Each femtocell BS is connected to a gateway in the operators' core network via a normal broadband internet connection. Various mobile stations MSs (e.g. mobile phones, laptops, etc.) are connected either to the macro cell BS or to one of the femtocells. In the scenario illustrated in the Fig. it is assumed that one mobile station MS (the lower one in the Fig.) experiences interference with one of the femtocell base stations and that both femtocells interfere with each other.

Currently, there is no over-the-air communication between femtocells and the macro cells defined in the IEEE 802.16 standards. According to the present invention a communication scheme is realized which uses over-the-air communication between femtocell base stations and macrocell BSs. As can be obtained from the Fig., a femtocell base station acts like a special MS. It only uses signals and/or control channels for listening for information from the macrocell BS, and maybe for reporting of measurements to the macrocell BS. No data channels are allocated to a femtocell.

The macrocell BS has a list to record the information related to each femtocell within its coverage area. For example, this information can include the location of a femtocell BS, results of downlink measurements of a femtocell BS and the transmit power of a femtocell BS.

In the scenario illustrated in the Fig. it is assumed that mobile station MS (i.e. the laptop illustrated in the lower part of the Fig.) scans the downlink channels. This scan reveals that the interference from a femtocell base station (again the lower one in the Fig.) is too high. As a result, the mobile station MS will report its measurements to the macrocell BS, and the latter will employ the over-the-air link established according to the present invention to inform the femtocell base station to adjust its transmit power and/or allocated subchannels to reduce the co-channel interference. Alternatively or additionally, the macro cell BS may adjust its own subchannel assignment, e.g. by allocating a few of its own subchannels to the femtocell, and/or its transmission power.

The approach according to the present invention will lead to quick response to deal with the interference between WiMAX femtocells and macro cells. Although it will introduce a small signaling overhead, it has significant advantages over approaches with no or at least no over-the-air communication between femtocells and macro cells.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

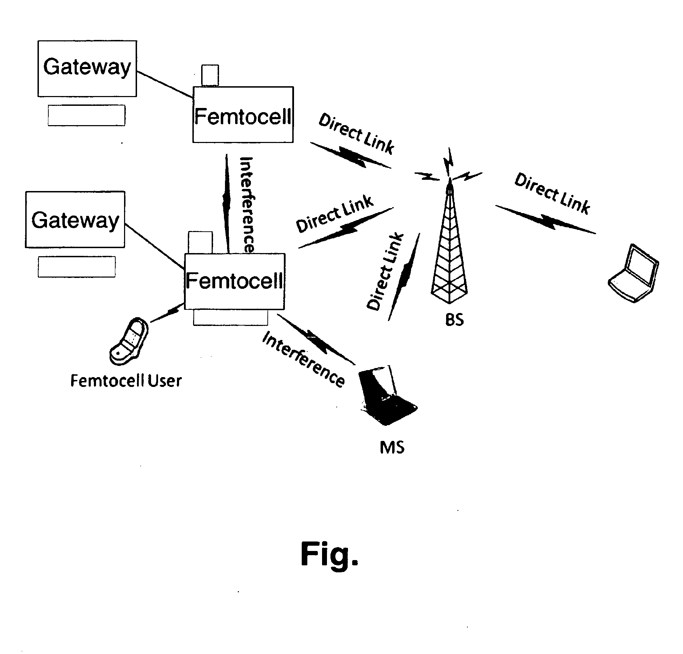

## Claims

1. Method for operation of a WiMAX network, said network including a WiMAX macrocell network with one or more macrocell base stations and at least one femtocell base station, said macrocell base stations and said at least one femtocell base station being configured to offer connectivity to mobile stations, **characterized in that** a communication scheme between said macrocell network and said at least one femtocell base station is defined according to which a direct wireless link is established as a bidirectional link between said at least one femtocell base station and one or more of said macrocell base stations, and that said femtocell base station reports results of measurements conducted by itself and/or measurements information received from attached mobile stations to one or more of said macrocell base stations via said direct wireless link.

2. Method according to claim 1, wherein over said direct link said femtocell base station employs signals and/or control channels only.

3. Method according to claim 1 or 2, wherein said direct link is employed by said femtocell base station to receive information from one or more of said macrocell base stations.

4. Method according to any of claims 1 to 3, wherein said direct link is employed by said one or more macrocell base stations to record information related to each femtocell base station being located in their coverage area.

5. Method according to claim 4, wherein said recorded information includes the location of a femtocell base station, the transmit power of a femtocell base station, and/or measurement information from a femtocell base station.

6. Method according to claim 5, wherein said measurement information includes results of measurements performed by said femtocell base station.

7. Method according to claim 5 or 6, wherein said measurement information includes feedback information said femtocell base station receives from mobile stations located within its coverage area.

8. Method according to any of claims 1 to 7, wherein a femtocell base station is configured to report said measurement information via said direct link to one or more of said macrocell base stations located within the coverage area of said femtocell base station.

9. Method according to any of claims 1 to 8, wherein said femtocell base station performs said measurement information reports on a regular basis.

10. Method according to any of claims 1 to 9, wherein said direct link is employed by said one or more macrocell base stations to inform a femtocell base station to adjust its transmit power and/or allocated subchannels, and/or
wherein said direct link is employed for information exchange between different femtocell base stations with a macrocell base stations functioning as relay node.

11. WiMAX network including a WiMAX macrocell network with one or more macrocell base stations and at least one femtocell base station, said macrocell base stations and said at least one femtocell base station being configured to offer connectivity to mobile stations,
**characterized in that** a communication scheme between said macrocell network and said at least one femtocells base station is defined according to which a direct wireless link is established as a bidirectional link between said at least one femtocell base station and one or more of said macrocell base stations located within the coverage area of said at least one femtocell base station and that said femtocell base station reports results of measurements conducted bey itself and/or measurement information received from attached mobile stations to one or more of said macrocell base stations via said direct wireless link.

## Patentansprüche

1. Verfahren zum Betrieb eines WiMAX Netzwerks, wobei das Netzwerk ein WiMAX Makrozellen-Netzwerk mit einer oder mehreren Makrozellen-Basisstationen sowie wenigstens eine Femtozellen-Basisstation umfasst, wobei die Makrozellen-Basisstationen und die wenigstens eine Femtozellen-Basisstation konfiguriert sind, mobilen Stationen Konnektivität zu bieten,
**dadurch gekennzeichnet, dass** ein Kommunikationsschema zwischen dem Makrozellen-Netzwerk und der wenigstens einen Femtozellen-Basisstation definiert ist, wonach ein direkter drahtloser Link als ein bidirektionaler Link zwischen der wenigstens einen Femtozellen-Basisstation und einer oder mehreren der Makrozellen-Basisstationen hergestellt ist, und dass die Femtozellen-Basisstation Ergebnisse von von ihr selbst durchgeführten Messungen und/oder von verbundenen mobilen Stationen empfangene Messinformationen über den direkten drahtlosen Link an eine oder mehrere der Makrozellen-Basisstationen berichtet.

2. Verfahren nach Anspruch 1, wobei die Femtozellen-Basisstation über den direkten Link nur Signale und/oder Kontrollkanäle verwendet.

3. Verfahren nach Anspruch 1 oder 2, wobei der direkte Link von der Femtozellen-Basisstation verwendet wird, um Informationen von einer oder mehreren der Makrozellen-Basisstationen zu empfangen.

4. Verfahren nach einem der Ansprüche 1 bis 3, wobei der direkte Link von einer oder mehreren der Makrozellen-Basisstationen verwendet wird, um Informationen in Bezug auf jede Femtozellen-Basisstation, die in ihrem Abdeckungsbereich lokalisiert ist, zu erfassen.

5. Verfahren nach Anspruch 4, wobei die erfassten Informationen den Ort einer Femtozellen-Basisstation, die Sendeleistung einer Femtozellen-Basisstation und/oder Messinformationen von einer Femtozellen-Basisstation umfassen.

6. Verfahren nach Anspruch 5, wobei die Messinformationen Ergebnisse von von der Femtozellen-Basisstation durchgeführten Messungen umfassen.

7. Verfahren nach Anspruch 5 oder 6, wobei die Messinformationen Feedback-Informationen umfassen, welche die Femtozellen-Basisstation von innerhalb ihres Abdeckungsbereichs lokalisierten mobilen Stationen empfängt.

8. Verfahren nach einem der Ansprüche 1 bis 7, wobei eine Femtozellen-Basisstation so konfiguriert ist, dass sie Messinformationen über den direkten Link an eine oder mehrere der innerhalb des Abdeckungsbereichs der Femtozellen-Basisstation lokalisierten Makrozellen-Basisstationen berichtet.

9. Verfahren nach einem der Ansprüche 1 bis 8, wobei die Femtozellen-Basisstation die Messinformationsberichte auf einer regelmäßigen Basis durchführt.

10. Verfahren nach einem der Ansprüche 1 bis 9, wobei der direkte Link von einer oder mehreren der Makrozellen-Basisstationen verwendet wird, um eine Femtozellen-Basisstation zu informieren, dass sie ihre Sendeleistung anpasst und/oder Subkanäle zuweist, und/oder
wobei der direkte Link zum Informationsaustausch zwischen unterschiedlichen Femtozellen-Basisstationen und einer als Relaisknoten fungierenden Makrozellen-Basisstation verwendet wird.

11. WiMAX Netzwerk, umfassend ein WiMAX Makrozellen-Netzwerk mit einer oder mehreren Makrozellen-Basisstationen sowie wenigstens eine Femtozellen-Basisstation, wobei die Makrozellen-Basisstationen und die wenigstens eine Femtozellen-Basisstation konfiguriert sind, mobilen Stationen Konnektivität zu bieten,
**dadurch gekennzeichnet, dass** ein Kommunikationsschema zwischen dem Makrozellen-Netzwerk und der wenigstens einen Femtozellen-Basisstation definiert ist, wonach ein direkter drahtloser Link als ein bidirektionaler Link zwischen der wenigstens einen Femtozellen-Basisstation und einer oder mehreren der innerhalb des Abdeckungsbereichs der wenigstens einen Femtozellen-Basisstation lokalisierten Makrozellen-Basisstationen hergestellt ist, und dass die Femtozellen-Basisstation Ergebnisse von von ihr selbst durchgeführten Messungen und/oder von verbundenen mobilen Stationen empfangene Messinformationen über den direkten drahtlosen Link an eine oder mehrere der Makrozellen-Basisstationen berichtet.

## Revendications

1. Procédé d'exploitation d'un réseau WiMAX, ledit réseau incluant un réseau macrocellulaire WiMAX avec une ou plusieurs stations de base macrocellulaires et au moins une station de base femtocellulaire, lesdites stations de base macrocellulaires et ladite au moins une station de base femtocellulaire étant configurées de manière à offrir une connectivité à des stations mobiles,
**caractérisé en ce qu'**un schéma de communication entre ledit réseau macrocellulaire et ladite au moins une station de base femtocellulaire est défini, selon lequel une liaison sans fil directe est établie sous la forme d'une liaison bidirectionnelle entre ladite au moins une station de base femtocellulaire et une ou plusieurs desdites stations de base macrocellulaires, et **en ce que** ladite station de base femtocellulaire signale des résultats de mesures réalisées par elle-même et/ou des informations de mesures reçues à partir de stations mobiles rattachées à une ou plusieurs desdites stations de base macrocellulaires, par le biais de ladite liaison sans fil directe.

2. Procédé selon la revendication 1, dans lequel, sur ladite liaison directe, ladite station de base femtocellulaire emploie des signaux et/ou des canaux de commande uniquement.

3. Procédé selon la revendication 1 ou 2, dans lequel ladite liaison directe est employée par ladite station de base femtocellulaire en vue de recevoir des informations en provenance d'une ou plusieurs desdites stations de base macrocellulaires.

4. Procédé selon l'une quelconque des revendications 1 à 3, dans lequel ladite liaison directe est employée par ladite une ou lesdites plusieurs stations de base macrocellulaires en vue d'enregistrer des informations relatives à chaque station de base femtocellulaire située dans sa/leur zone de couverture.

5. Procédé selon la revendication 4, dans lequel lesdites informations enregistrées incluent l'emplacement d'une station de base femtocellulaire, la puissance d'émission d'une station de base femtocellulaire, et/ou des informations de mesures en provenance d'une station de base femtocellulaire.

6. Procédé selon la revendication 5, dans lequel lesdites informations de mesures incluent des résultats de mesures mises en oeuvre par ladite station de base femtocellulaire.

7. Procédé selon la revendication 5 ou 6, dans lequel lesdites informations de mesures incluent des informations de rétroaction que ladite station de base femtocellulaire reçoit en provenance de stations mobiles situées dans sa zone de couverture.

8. Procédé selon l'une quelconque des revendications 1 à 7, dans lequel une station de base femtocellulaire est configurée de manière à signaler lesdites informations de mesures, par le biais de ladite liaison directe, à une ou plusieurs desdites stations de base macrocellulaires situées au sein de la zone de couverture de ladite station de base femtocellulaire.

9. Procédé selon l'une quelconque des revendications 1 à 8, dans lequel ladite station de base femtocellulaire met en oeuvre lesdits signalements d'informations de mesures sur une base régulière.

10. Procédé selon l'une quelconque des revendications 1 à 9, dans lequel ladite liaison directe est employée par ladite une ou lesdites plusieurs stations de base macrocellulaires en vue d'inviter une station de base femtocellulaire à ajuster sa puissance d'émission et/ou ses sous-canaux affectés ; et/ou
dans lequel ladite liaison directe est employée pour l'échange d'informations entre différentes stations de base femtocellulaires avec une station de base macrocellulaire fonctionnant en qualité de noeud de relais.

11. Réseau WiMAX incluant un réseau macrocellulaire WiMAX avec une ou plusieurs stations de base macrocellulaires et au moins une station de base femtocellulaire, lesdites stations de base macrocellulaires et ladite au moins une station de base femtocellulaire étant configurées de manière à offrir une connectivité à des stations mobiles,
**caractérisé en ce qu'**un schéma de communication entre ledit réseau macrocellulaire et ladite au moins une station de base femtocellulaire est défini, selon lequel une liaison sans fil directe est établie sous la forme d'une liaison bidirectionnelle entre ladite au moins une station de base femtocellulaire et une ou plusieurs desdites stations de base macrocellulaires situées au sein de la zone de couverture de ladite au moins une station de base femtocellulaire, et **en ce que** ladite station de base femtocellulaire signale des résultats de mesures réalisées par elle-même et/ou des informations de mesures reçues à partir de stations mobiles rattachées à une ou plusieurs desdites stations de base macrocellulaires, par le biais de ladite liaison sans fil directe.
